(19) Europäisches Patentamt
European Patent Office
Office européen des brevets

(11) **EP 3 674 790 B1**

(12) **EUROPEAN PATENT SPECIFICATION**

(45) Date of publication and mention
of the grant of the patent:
**14.09.2022 Bulletin 2022/37**

(21) Application number: **19216348.3**

(22) Date of filing: **14.12.2019**

(51) International Patent Classification (IPC):
**G02F 1/15** (2019.01)       **G03B 17/02** (2021.01)
**G06F 1/16** (2006.01)       **G06F 3/00** (2006.01)
**H04M 1/02** (2006.01)       **G03B 11/00** (2021.01)
**H04N 5/225** (2006.01)       G02F 1/1333 (2006.01)
**G02F 1/153** (2006.01)

(52) Cooperative Patent Classification (CPC):
**G02F 1/15; G03B 17/02; G06F 1/1609;
G06F 1/1626; G06F 1/1656; G06F 1/1686;
H04M 1/0264;** G02F 1/133308; G02F 1/133314;
G02F 1/13338; G02F 2001/1536; G02F 2201/38;
G02F 2201/44; G02F 2203/01; G02F 2203/62;

(Cont.)

(54) **ELECTRONIC DEVICE**

ELEKTRONISCHE VORRICHTUNG

DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2018 CN 201811621699**

(43) Date of publication of application:
**01.07.2020 Bulletin 2020/27**

(73) Proprietor: **GUANGDONG OPPO MOBILE
TELECOMMUNICATIONS
CORP., LTD.
Wusha, Chang'an
Dongguan,
Guangdong 523860 (CN)**

(72) Inventor: **YANG, Xin
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(56) References cited:
**WO-A1-2008/149179       WO-A1-2017/075459
US-A1- 2007 153 119       US-A1- 2015 077 830**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
G03B 11/00; H04N 5/2252

**Description**

**FIELD**

The present disclosure relates to a technical field of image device, particularly to an electronic device.

**BACKGROUND**

With development of electronic devices, users have higher demands for appearance of the electronic devices. An electronic device such as a mobile phone is generally provided with a camera unit and a light input area for light collection of the camera unit. The light input area is generally transparent and easy to destroy appearance integrality of the electronic device. Although the appearance integrality of the mobile terminal can be guaranteed by providing a movable camera unit, the arrangement of the camera unit becomes complicated.

US2015077830 provides a portable electronic device including a housing, a display module, an optical element and a switchable layer. The switchable layer is disposed between the optical element and the second aperture and overlapping the second aperture, wherein the switchable layer is capable of being switched between a substantially opaque state and a substantially transparent state. WO2008149179 provides an electronic device including camera circuitry for carrying out a camera related operation, the camera circuitry including a camera lens that is at least partially covered by a visual indicator element. The visual indicator element is substantially opaque when the camera circuitry is in a first state and the visual indicator element is substantially transparent when the camera circuitry is in a second state. WO2017075459 provides various embodiments concerning sensors and other components that can be disposed beneath a variable transparency layer of a mobile device. US2007153119 provides an apparatus including a housing having an integrated camera. A panel is positioned in front of at least a portion of the camera and is operable to selectively switch between at least a substantially transparent state and at least a substantially opaque state.

**SUMMARY**

The object of the present disclosure is to solve the problems of the known art. The object is satisfied by an electronic device as defined in independent claim 1. Additional features of the present disclosure are defined in the corresponding depending claims. Any embodiment in the present disclosure that does not fall within the scope of the present invention should be regarded as an example for understanding the present disclosure.

**BRIEF DESCRIPTION OF THE DRAWINGS**

To describe technical solutions in embodiments of the present disclosure more clearly, the following will briefly introduce the accompanying drawings required for the description of the embodiments. Obviously, the accompanying drawings described below show some embodiments of the present disclosure, and those skilled in the art can obtain other drawings based on these drawings without paying creative efforts.

Fig. 1 illustrates a schematic view of an example of an electronic device of the present application.
Fig. 2 illustrates a schematic view of an example of an electronic device of the present application.
Fig. 3 illustrates a schematic view of an example of an electronic device of the present application.
Fig. 4 illustrates a schematic view of an example of an electronic device of the present application.
Fig. 5 illustrates a schematic view of an example of an electronic device of the present application.
Fig. 6 illustrates a schematic view of an example of an electronic device of the present application.
Fig. 7 illustrates a schematic view of an example of an electronic device of the present application.
Fig. 8 illustrates a front schematic view of an electrochromic device in the example of Fig. 7.
Fig. 9 illustrates a schematic view of an embodiment of an electronic device of the present application.
Fig. 10 illustrates a front view of an apparent film layer in Fig. 9.
Fig. 11 illustrates a schematic view of a stacked structure for a colored area of the apparent film layer in Fig. 10.
Fig. 12 illustrates a schematic view of another embodiment of an electronic device of the present application.
Fig. 13 illustrates a schematic view of a light path for a stacked structure of an apparent film layer, an electrochromic device, and a substrate colored layer of the electronic device in the embodiment of Fig. 12, in which the stacked structure is not opposite a camera area.
Fig. 14 illustrates a schematic view of an example of an electronic device of the present application.
Fig. 15 illustrates a front schematic view of an example of an electronic device of the present application.
Fig. 16 illustrates a schematic view of an example of an electronic device of the present application.
Fig. 17 illustrates a schematic view of an example of an electronic device of the present application.

Fig. 18 illustrates a schematic view of an example of an electronic device of the present application.
Fig. 19 illustrates a schematic view of an example of an electronic device of the present application.
Fig. 20 illustrates a schematic view of an embodiment of an electronic device of the present application.
Fig. 21 illustrates a schematic view of an embodiment of an electronic device of the present application.
Fig. 22 illustrates a schematic view of an embodiment of an electronic device of the present application.
Fig. 23 illustrates a schematic view of an embodiment of an electronic device of the present application.
Fig. 24 illustrates a front schematic view of an embodiment of an electronic device of the present application.
Fig. 25 illustrates a front schematic view of yet another embodiment of an electronic device of the present application.
Fig. 26 illustrates a block diagram of compositions of an embodiment of an electronic device of the present application.
Fig. 27 illustrates a schematic view of an overall structure of an electronic device.
Fig. 28 illustrates a schematic view of an operation state of an electronic device.
Fig. 29 illustrates a schematic view of another operation state of an electronic device.

## DETAILED DESCRIPTION

The present disclosure will be further described in detail with reference to the drawings and embodiments in the following. Specifically, the following embodiments are used to illustrates the present disclosure, but do not limit the scope of the present disclosure.

The term "electronic device" (or called as "apparatus") used herein includes, but is not limited to a device configured to receive/send a communication signal through a wired connection (for example, through a Public Switched Telephone Network (PSTN), a digital subscriber line (DSL), a digital cable, a direct cable connection, and/or another data connection/network) and/or through a wireless interface (for example, with respect to a cellular network, a Wireless Local Area Network (WLAN), a digital television network such as DVB-H network, a satellite network, AM-FM broadcast transmitter and/or another communication terminal). The communication terminal which is configured to communicate through the wireless interface may be called as a "wireless communication terminal", a "wireless terminal" or a "mobile terminal". The example of the mobile terminal includes, but is not limited to a satellite or cellular phone; a personal communication system (PCS) terminal which may combine a cellular radiotelephone with data processing, facsimile and data communication capacity; a PDA which may include a radiotelephone, a pager, an internet/ intranet access, a Web browser, a blotter, a calendar and/or a global positioning system (GPS); and a regular laptop and/or a handheld receiver or other electric devices including a radiotelephone transceiver. A mobile phone is an electronic device equipped with a cellular communication module.

An electronic device includes a housing, a rear cover, and a rear camera. The rear cover is connected to the housing and includes a transparent casing and an electrochromic device, and the transparent casing and the electrochromic device are stacked. The electrochromic device includes a first baseplate, a first conductive layer, a chromic material layer, a second conductive layer, and a second baseplate stacked sequentially. The rear camera is opposite the electrochromic device;

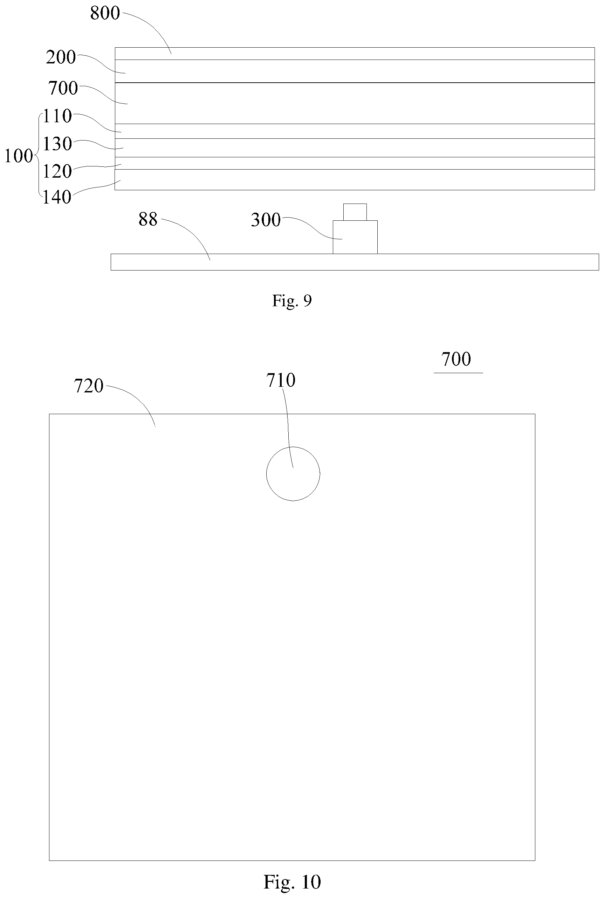

As illustrated in Fig. 9, the electronic device includes an electrochromic device 100, a transparent casing 200, a camera 300, and an apparent film layer 700. The apparent film layer 700 illustrated in the present embodiment is provided between the electrochromic device 100 and the transparent casing 200, or the electrochromic device 100 can be interposed between the apparent film layer 700 and the transparent casing 200.

As illustrated in Fig. 10, the apparent film layer 700 includes a light-transmissive area 710 and a colored area 720 surrounding the light-transmissive area 710, and the camera corresponds to the light-transmissive area 710. The light-transmissive area 710 can be a light-transmissive hole or a light-transmissive through hole, i.e. the apparent film layer 700 defines an aperture. The light-transmissive area 710 can also be a transparent area with base material, and the light-transmissive area 710 can be circular to match a lens of the camera 300.

The colored area 720 is configured to cooperate with the electrochromic device 100 to enable the electronic device to exhibit a color-changing appearance effect. The appearance effect can be observed from an outer side of the transparent casing 200.

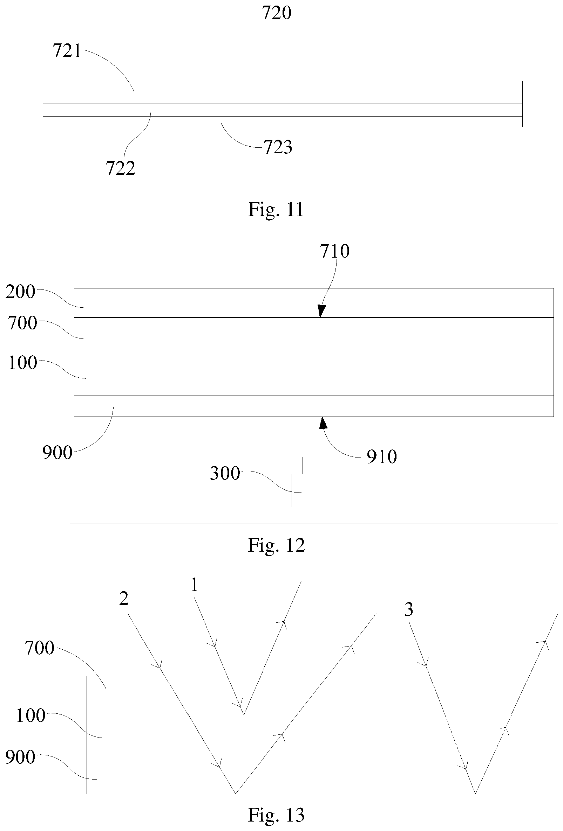

The colored area 720 in the present embodiment can include a third baseplate 721 and at least one of an ink layer and an optical coating layer stacked on the third baseplate 721. Specifically, as illustrated in Fig. 11, the colored area 720 of the apparent film layer 700 in the present embodiment includes the third baseplate 721, an optical coating layer 722, and an ink layer 723.

As illustrated in Fig. 12, the electronic device includes an electrochromic device 100, a transparent casing 200, a camera 300, an apparent film layer 700, and a substrate colored layer 900. The substrate colored layer 900 and the apparent film layer 700 are provided at two opposite sides of the electrochromic device 100 respectively, the substrate colored layer 900 defines a through hole 910, and the through hole 910 corresponds to the light-transmissive area 710 of the apparent film layer 700, thereby ensuring that the substrate colored layer 900 will not shield the camera 300.

Optionally, the third baseplate 721 can be made from glass or transparent resin with a certain hardness. The optical coating layer 722 can be a structure having one or more layers formed by physical vapor deposition, and can be at least one of an antireflection film layer having an optical antireflection effect, a UV texture transfer layer having a particular optical texture, a film layer having a protection effect, a NCVM layer having an insulation effect, a functional film layer which can improve connection performance between layers, etc. Detailed stacked structure and combination forms of functional layers of the optical coating layer 722 are not specifically limited herein. The ink layer 723 can be formed by spraying or dyeing.

It should be noted that the figure of the present embodiment only shows one stacked structure of the colored area 720 of the apparent film layer 700. However, in other modified embodiments, the colored area 720 of the apparent film layer 700 can have a stacked structure composed of only the third baseplate 721 and the optical coating layer 722 or only the third baseplate 721 and the ink layer 723. Alternatively, the colored area 720 of the apparent film layer 700 can have the following structure that the ink layer 723 is interposed between the optical coating layer 722 and the third baseplate 721, or the ink layer 723 and the optical coating layer 722 are provided at two sides of the third baseplate 721 respectively.

Optionally, various functional layers of the colored area 720 of the apparent film layer 700 are arranged at the same side of the third baseplate 721, and the side provided with the functional layers can be connected to the first conductive layer 110 of the electrochromic device 100, e.g. through the optically clear adhesive 500 in other embodiments. The various functional layers indicated herein include the optical coating layer 722, the ink layer 723, etc. The apparent film layer 700 can be an individual structure, that is, the apparent film layer 200 can be sheet or film layer structure which is individually fabricated. The apparent film layer 700 can be fixedly connected to the electrochromic device 100 by adhering. In the present embodiment, specifically, the apparent film layer 700 is fixedly connected to the first conductive layer 110.

The substrate colored layer 900 can be a colored layer, such as the ink layer, the metal coating, etc., formed on the first baseplate 140 or the second conductive layer 120 of the electrochromic device 100.

The electronic device provided in the present embodiment can provide a richer appearance effect by superimposition, with a stacked structure of the electronic device 100, the apparent film layer 700, and the substrate colored layer 900 at an area not corresponding to the camera 300.

An electronic device includes a screen, a rear cover, and a camera. The rear cover is connected to the screen, and the rear cover and the screen cooperatively define a receiving space therebetween. The rear cover has a first state and a second state and is switchable between the first state and the second state. The first state is a non-transparent state or a semi-transparent state, and the second state is a transparent state. The camera is located in the receiving space. When the camera is turned on, the rear cover is able to switch from the first state to the second state to allow the camera to acquire an optical signal through the rear cover.

An electronic device includes a rear cover and a camera. The rear cover includes a main body and a decorative cover plate. The decorative cover plate has a first state and a second state and is switchable between the first state and the second state. The first state is a non-transparent state or a semi-transparent state, and the second state is a transparent state. The camera is opposite the decorative cover plate to allow the camera to acquire an optical signal through the decorative cover plate.

An electronic device includes a processor, a camera, and a rear cover having an electrochromic function. The processor is coupled with the rear cover and the camera separately and configured to receive a control command configured to control the camera to perform image capture through the rear cover.

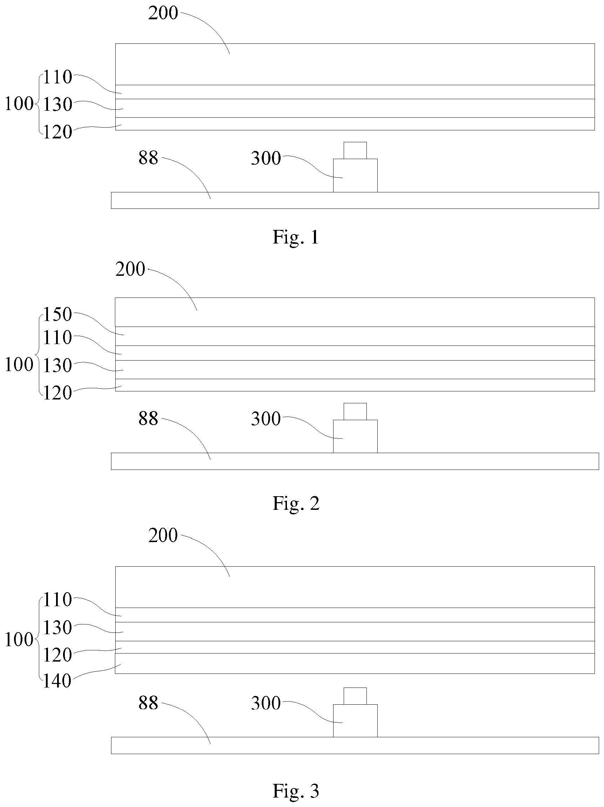

It should be noted that the electronic device illustrated in Fig. 1 can be an electronic device having an image capture device such as a mobile phone, a tablet computer, a laptop computer, a wearable device, etc. The image capture device can be a camera, a sensor or the like. The electronic device in the present embodiment includes an electrochromic device 100, a transparent casing 200, and a camera 300. The term "comprises," "include," and any variants thereof are intended to cover the non-exclusive inclusion.

Specifically, the electrochromic device 100 is located at a side of the transparent casing 200, and the camera 300 corresponds to the electrochromic device 100. Specifically, the camera 300 and the electrochromic device 100 are located at the same side of the transparent casing 200, i.e. the electrochromic device 100 is arranged at an inner side of the transparent casing 200. Certainly, in some other embodiments, the electrochromic device 100 and the camera 300 may also be disposed at two opposite sides of the transparent casing 200, i.e. the electrochromic device 100 is arranged at an outer surface of the transparent casing 200. The reference numeral 88 in the drawings can denote a middle frame or a circuit board of the electronic device, and the camera 300 can be secured to the middle frame or the circuit board. The transparent casing 200 can be a rear cover or a battery cover of the electronic device, and can also be a front cover plate of the electronic device. The camera 300 can be a rear camera or a front camera. The structure with respect to this port is not specifically limited herein.

Optionally, the transparent casing 200 supports and protects the electrochromic device 100. A material of the transparent casing 200 can include glass or transparent resin with a certain hardness. The transparent casing 200 includes polyethylene terephthalate (PET or PEIT), which is generally known as polyester resin, i.e. a polycondensate of terephthalic acid and ethylene glycol), poly methyl methacrylate (PMMA, also known as acrylic or perspex), silicon dioxide glass, etc.

The electrochromic device 100 is located at an inner surface of the transparent casing 200 and includes a first conductive layer 110, a chromic material layer 130, and a second conductive layer 120. The electrochromic device 100 can be sequentially formed on a surface of the transparent casing 200 by physical vapor deposition (PVD). Physical vapor deposition specifically includes vacuum evaporation, sputtering, ion plating, and so on. Ion plating includes hollow cathode ion plating, hot cathode ion plating, arc ion plating, active reaction ion plating, radio frequency ion plating, direct current discharge ion plating, etc.

Taking organic polymer and inorganic material as examples, the organic polymer includes polyaniline, polythiophene, etc., and the inorganic material includes prussian blue, transition metal oxide such as tungsten trioxide, etc. The steps of forming the electrochromic device 100 can include forming the first conductive layer 110, the chromic material layer 130, and the second conductive layer 120 sequentially on the surface of the transparent casing 200 by PVD. The chromic material layer 130 can specifically include a transition metal layer, an ion conducting layer, and an ion storage layer containing metal Li, or other material; while the transition metal layer can include tungsten trioxide, vanadium pentoxide, or the like.

Thicknesses of the first conductive layer 110 and the second conductive layer 120 can be between 100nm and 300nm, respectively, and can specifically be 100nm, 120nm, 150nm, 200nm, 280nm and 300nm. The first conductive layer 110 and the second conductive layer 120 are made of a transparent conductive material. The transparent conductive material can be indium tin oxide (ITO), aluminum zinc oxide (AZO), graphene film, and so on.

In an example illustrated in Fig. 2, the electrochromic device 100 also includes an ion barrier layer 150. The ion barrier layer 150 is located between the first conductive layer 110 and the transparent casing 200. The ion barrier layer 150 can be formed on the transparent casing 200 by PVD. The ion barrier layer 150 can be made from metal or non-metal oxide, such as silicon oxide or aluminum oxide. The ion barrier layer 150 can prevent ions or particles in the transparent casing 200 from moving into the chromic material layer 130 through the first conductive layer 110, thereby protecting the chromic material layer 130.

In the electronic device provided by the present application, the electrochromic device is arranged on the transparent casing, with the characteristic that the electrochromic device can change its transmittance when energized, the camera can be shielded on the one hand, and the transparent casing can have an appearance capable of changing its color on the other.

In an example illustrated in Fig. 3, the electronic device includes an electrochromic device 100, a transparent casing 200, and a camera 300. The electrochromic device 100 is attached to the transparent casing 200, and a lens of the camera 300 corresponds to the electrochromic device 100.

Optionally, the electrochromic device 100 also includes a first baseplate 140. The first baseplate 140 is provided at a side surface of the second conductive layer 120 away from the chromic material layer 130, and the first baseplate 140 is used to support and protect the electrochromic device 100. The first baseplate 140 is a glass baseplate or a plastic baseplate. The plastic baseplate includes a baseplate made of a transparent resin material.

A manufacturing method of the electrochromic device 100 in the present example can be similar to that of example 1. The first conductive layer 110, the chromic material layer 130, and the second conductive layer 120 are sequentially formed on the transparent casing 200, and then the first baseplate 140 is adhered to the second conductive layer 120 (in which an adhesive layer is not illustrated in the drawings). Alternatively, the electrochromic device 100 is formed by the following method including: forming the first conductive layer 110 on the transparent casing 200 by PVD, forming the second conductive layer 120 on the first baseplate 140, gluing an annular sealant (not illustrated in the drawings) between the first conductive layer 110 and the second conductive layer 120 and providing a spacer between the first conductive layer 110 and the second conductive layer 120, and vacuum infusing small organic molecules into a sealed chamber defined between the first conductive layer 110 and the second conductive layer 120 after solidification and formation of the sealant. The small organic molecules can be viologens or the like. A specific forming process and principle of small organic molecule electrochromic structure can be understood by those skilled in the art and will not be described in detail herein.

The electrochromic device 100 can also be formed by a method, including sequentially forming the second conductive layer 120, the chromic material layer 130, and the first conductive layer 110 on the first baseplate 140 by PVD, and then adhering the transparent casing 200 to the first conductive layer 110 (in which an adhesive layer is not illustrated in the drawings). Both of the above two methods can obtain a combined structure of the electrochromic device 100 and the transparent casing 200 according to the present application.

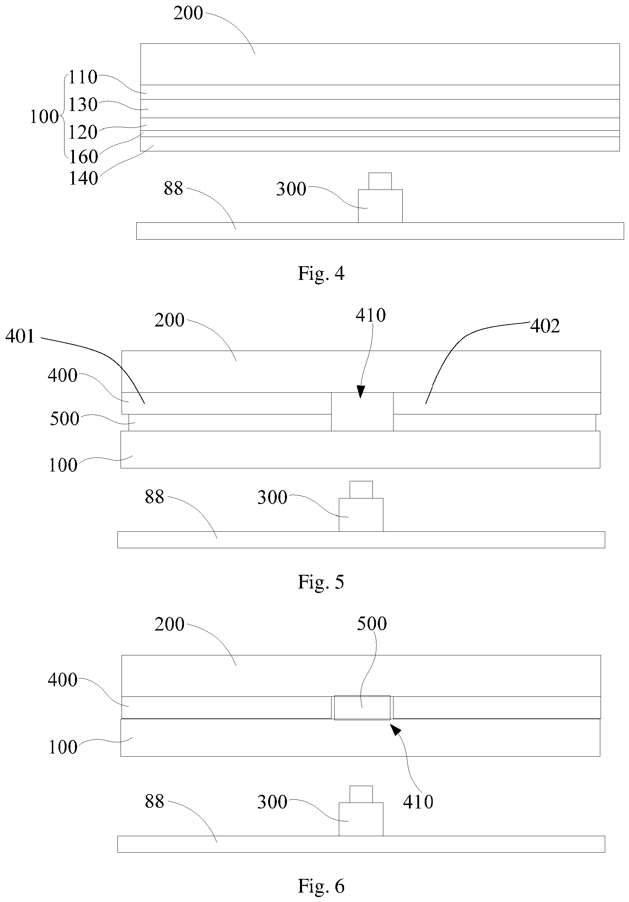

In an example illustrated in Fig. 4, the electrochromic device 100 includes a protective layer 160. The protective layer 160 can be located between the first baseplate 140 and the second conductive layer 120. As illustrated in Fig. 4, the protective layer 160 is provided at a side surface of the second conductive layer 120 away from the chromic material layer 130. Optionally, one or more protective layers 160 can be provided through physical vapor deposition, and a material of the protective layer can be metal oxide or inorganic nonmetal, and specifically can be silicon oxide, aluminum oxide, titanium oxide, etc. In some embodiments, there may be no first baseplate 140 but only the protective layer 160. The effect of the protective layer 160 is to protect the second conductive layer 120 during manufacturing.

Optionally, the first baseplate 140 or the protective layer 160 of the electronic device can prevent external moisture from permeating into the chromic material layer 130 inside the electrochromic device 100 through the second conductive layer 120 so as to form barrier protection for the electrochromic device 100. The first baseplate 140 or the protective layer 160 also can prevent substances such as small organic molecules, ions filled in the chromic material layer 130 from exuding, thereby further improving the reliability of the electrochromic device.

In an example illustrated in Fig. 5, the electronic device includes an electrochromic device 100, a transparent casing 200, a camera 300, and a shield layer 400. The electrochromic device 100 is attached to the transparent casing 200, and a lens of the camera 300 corresponds to the electrochromic device 100. The shield layer 400 is provided between the electrochromic device 100 and the transparent casing 200. The shield layer 400, the electrochromic device 100, and the transparent casing 200 cooperatively define a space 410, such that the camera 300 can acquire an external optical signal through the electrochromic device 100, the space 410, and the transparent casing 200. The shield layer 400 includes a first shield layer 401 and a second shield layer 402, and the first shield layer 401 and the second shield layer 402 are spaced apart and provided at two sides of an inner surface of the transparent casing 200. The shield layer 400 can also be located at a periphery of the inner surface of the transparent casing 200.

Optionally, the space 410 is directly opposite the camera 300. The space 410 can also be non-directly opposite the camera 300, as long as the external optical signal can be guided into the camera 300 through a light guiding structure.

The shield layer 400 is an opaque layer. The shield layer 400 can be made from an opaque material such as ink, viscose, plastic, foam, etc. The shield layer 400 can be adhered to the electrochromic device 100 through an optically clear adhesive 500 with high transmittance. The optically clear adhesive 500 is provided between the shield layer 400 and the electrochromic device 100.

In an example illustrated in Fig. 6, the optically clear adhesive 500 is located in the space 410 of the shield layer 400. The optically clear adhesive 500 can fill the space 410. Based on such structure, on the one hand, reliable adhesion junctions between the electrochromic device 100 and the shield layer 400, as well as the transparent casing 200 can be guaranteed; on the other hand, a thickness of an overall structure of the electrochromic device 100 and the transparent casing 200 can be reduced by a thickness of one adhesive layer of the optically clear adhesive 500.

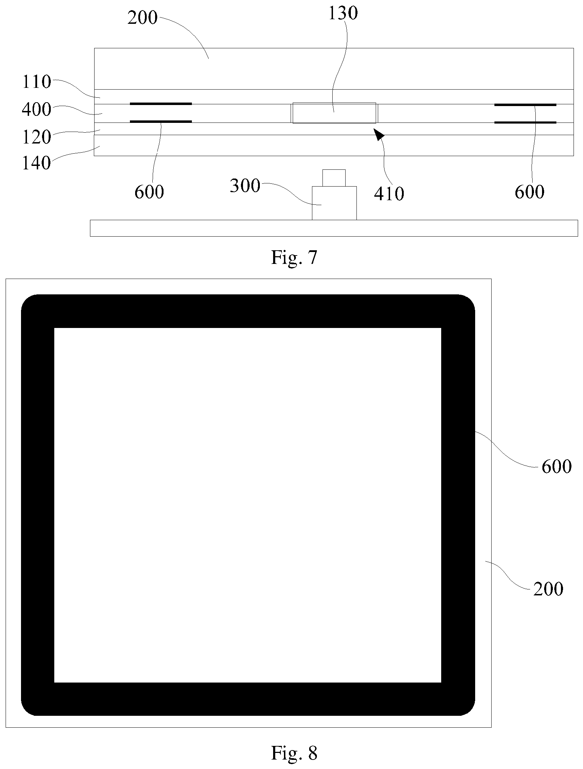

In an example illustrated in Fig. 7, the shield layer 400 is provided between the first conductive layer 110 and the second conductive layer 120 of the electrochromic device 100. The shield layer 400 defines a space 410 in the form of a through hole, the chromic material layer 130 is provided in the space 410 and on the same layer as the shield layer 400, and the camera corresponds to the space 410.

The present example can realize a shielding effect on internal devices of the electronic device when the electrochromic device is in a transparent state by providing the shield layer. Additionally, it should be noted that the shield layer 400 can also be provided at a side most adjacent to the camera 300 in other embodiments, and specifically the shield layer 400 can be attached to an outer side of the first baseplate 140 or an outer side of the second conductive layer 120 (in an embodiment without the first baseplate 140). With respect to structural variations of this embodiments, developments and variations made by a person skilled in the art based on the present embodiment are all within the scope of the present application.

In the example illustrated in Fig. 7, the shield layer 400 is also internally provided with a metal trace layer 600, and the metal trace layer 600 is electrically coupled with the first conductive layer 110 and the second conductive layer 120. The metal trace layer 600 can be formed by providing a metal film and etching on it, or by local metal coating, i.e. metal coating where the trace is required. The employed material can be a metal material with good conductive performance, such as molybdenum, aluminum, etc.

The smaller the sheet resistance, the faster the coloring speed of the electrochromic device 100 is. The ITO cannot have a high transmittance in case of a low square resistance. Under the premise that the ITO has a high transmittance, a color-changing speed can be maximized by designing the trace. The solution employed by the present embodiment is to increase the color-changing speed by designing a material and shape of the trace. Silver can be used to manufacture the trace due to its very small impedance. Additionally, the larger a sectional area of the trace, the smaller the resistance thereof is. In an embodiment illustrated in Fig. 8, uniform distribution of the voltage along the entire loop is achieved. Testing results (obtained by taking an electrochromic device with an area of 30*30mm as a sample for test) from different parameters are shown in the following table. It should be noted that the low square-resistance ITO herein includes the first conductive layer 110 and the second conductive layer 120.

| ITO impedance | 15 ohms | 15 ohms | 15 ohms | 15 ohms |
|---|---|---|---|---|
| impedance of silver wire | 11 ohms | 7 ohms | 4.5 ohms | 2 ohms |
| size of silver wire | 0.5*150*0.01mm | 1.0*150*0.01mm | 1.0*150*0.01mm | 1.0*150*0.02mm |

(continued)

| driving voltage | 1.2V | 1.0V | 0.8V | 0.7V |
|---|---|---|---|---|
| generated current | 25mA | 28mA | 27mA | 28mA |
| coloring time | 0.8-1.0s | 0.7-0.9s | 0.6-0.8s | 0.4-0.6s |

It can be concluded from the above table that, with constant ITO impedance, the coloring speed of the electrochromic device can be increased to a great extent by increasing a sectional size of the silver wire. Therefore, optionally, a desired coloring speed can be obtained when the trace has a width within 0.5-1mm and a thickness within 0.01-0.02mm. It should be noted herein that a trace coupling the first conductive layer with the second conductive layer can also be arranged in the embodiments of Figs. 1 and 3, and the trace can be of a structure similar to that of the present embodiment.

Additionally, a fading speed of the electrochromic device 100 is related to a discharge speed. When the voltage is withdrawn, the chromic material layer 130 starts to fade, but the fading speed thereof is slow. A circuit can be optimized in order to achieve a rapid fading. The technical solution employed in the present embodiment is to apply an instant reverse voltage and switch to a short circuit mode. If the reverse voltage is continuously applied, the material will change from fading to recoloring. Therefore, the control of switching time becomes particularly important, the present embodiment gives the testing results (also obtained by taking the electrochromic device with an area of 30*30mm as a sample for test) shown in the following table.

| fading speed in case of a normal open circuit | fading speed in case of a short circuit | fading speed in case of a reverse voltage plus short circuit |
|---|---|---|
| about 1-3s | about 0.5-1s | about 0.3-0.5s |

A proposed duration for application of the reverse voltage is 0.2-0.5s, then switch to the short circuit mode rapidly, and finally switch to the open mode after fading.

Embodiments of the present application can improve a response speed of the electrochromic device by design of the trace structure and optimization of the driving voltage, thereby reducing the response time of the electrochromic device, in which the response time includes the coloring speed and the fading speed.

Furthermore, as illustrated in Fig. 9, the electronic device also includes an antireflection film 800. The antireflection film 800 is provided at a side surface of the transparent casing 200 away from the electrochromic device 100, i.e. the side surface of the transparent casing 200 away from the apparent film layer 700. Certainly, in some other embodiments, the antireflection film 800 can also be provided at a surface of the apparent film layer 700, or at a side surface of the protective layer or the first baseplate 140 away from the second conductive layer 120 (such as in the embodiment illustrated in Fig. 4), or can be provided at the above plurality of positions at the same time. Specific arrangement position of the antireflection film 800 is not limited herein. A material of the antireflection film 800 can be calcium fluoride, etc., and it is used to reduce reflection so as to improve the light transmittance.

The electronic device in the present embodiment can exhibit a color-changing appearance effect by providing the apparent film layer 700.

Specifically, as illustrated in Fig. 13, a green apparent film layer 700 and a white substrate colored layer 900 are taken as an example for description. The transmittance of the electrochromic device 100 can vary between 0% (fully opaque) and 100% (fully transparent), and a semi-transparent mode between opaque and fully transparent is obtained when the transmittance is a middle value. When the transmittance of the electrochromic device 100 is 0, referring to a light path 1, the light in the light path 1 passes through the apparent film layer 700, and is refracted by the black (or dark) electrochromic device 100, the presented color of the light in the refracted light path 1 is a superposition of the green of the apparent film layer 700 and the black of the electrochromic device 100, i.e. purple. When the transmittance of the electrochromic device 100 is 100%, referring to a light path 2, the light can pass through the apparent film layer 700 and the electrochromic device 100 sequentially, and is refracted by the substrate colored layer 900, the presented color of the light in the refracted light path 2 is a superposition of the green of the apparent film layer 700 and the white of the substrate colored layer 900, i.e. still green. When the transmittance of the electrochromic device 100 is a value (in semi-transparent mode) between 0% (fully opaque) and 100% (fully transparent), referring to a light path 3, in such case, the light of the light path 3 can pass through the apparent film layer 700 and the electrochromic device 100 in a semi-transparent state sequentially, and is refracted by the substrate colored layer 900, the presented color of the light in the refracted light path 3 is a superposition of the green of the apparent film layer 700, the semi-transparent electrochromic device 100, and the white of the substrate colored layer 900, and the light in the light path 3 can present any color in the ribbon between green and purple according to different transmittances of the electrochromic device 100.

Additionally, in the present embodiment, only the green apparent film layer 700 and the white substrate colored layer 900 are taken as an example for description, but almost any color can be obtained when colors of the apparent film layer 700 and the substrate colored layer 900 are changed and the electrochromic device 100 is controlled to have different transmittances. Therefore, as can be seen from the above analysis, in the present embodiment, a rich appearance effect can be obtained by providing a stacked structure of the electronic device 100, the apparent film layer 700, and the substrate colored layer 900.

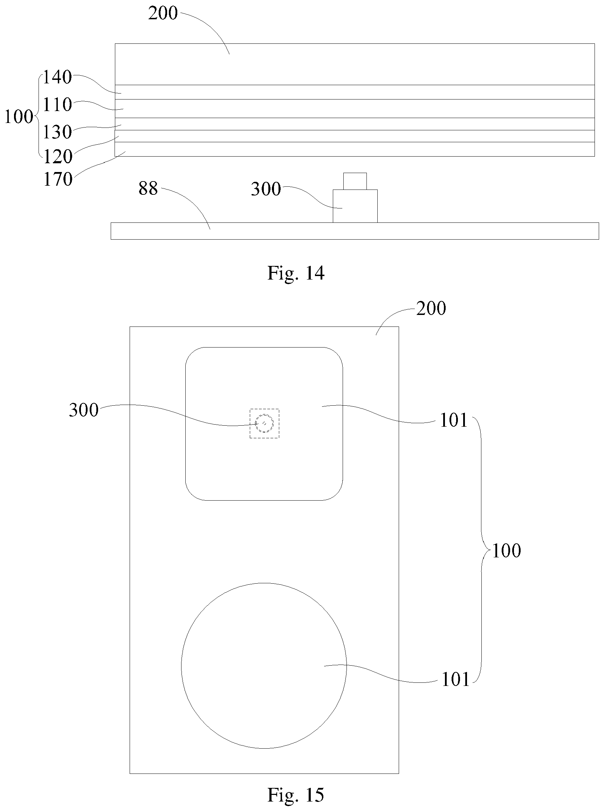

In an example illustrated in Fig. 14, the electronic device includes an electrochromic device 100, a transparent casing 200, and a camera 300. The difference between the present embodiment and the above-described embodiments is that the electrochromic device 100 includes the first baseplate 140, the first conductive layer 110, the chromic material layer 130, the second conductive layer 120, and the second baseplate 170 stacked sequentially.

That is to say, the electrochromic device 100 in the present example itself includes two baseplates, i.e. it constitutes a complete structure. During manufacture, the electrochromic device 100 having the complete structure can be attached to the transparent casing 200, i.e. the major difference from the above-described embodiments is that the transparent casing 200 is not used as a baseplate of the electrochromic device 100 anymore. Regarding the detailed structure and specific manufacturing method for the electrochromic device 100, and combination of the electrochromic device 100 and the transparent casing 200, it can be referred to the related description of the above-described embodiments, which will not be elaborated herein.

The electrochromic device in the electronic device provided by the present example has a structure with baseplates at two sides, and the conductive layers and the chromic layer are interposed between the two baseplates, thereby forming the complete electrochromic structure. The electrochromic device is easy to manufacture and convenient to be attached to the transparent casing, thereby avoiding direct introduction of the transparent casing into the manufacture process of the electrochromic device.

In an example illustrated in Fig. 15, the electronic device can similarly include an electrochromic device 100, a transparent casing 200, and a camera 300. The electrochromic device 100 illustrated in the present example can be attached to a surface of a portion of a side of the transparent casing 200, and a plurality of electrochromic devices 100 can be provided. The electronic device in the present example has two electrochromic devices 100, a first electrochromic device 101 is configured to shield the camera 300 and exhibit the color-changing appearance effect, and a second electrochromic device 102 is purely configured to exhibit the color-changing appearance effect. Certainly, in other embodiments, the electrochromic device 100 can be of other shapes, other quantities and arrangements, which are not specifically limited herein.

Such a structure is characterized in that a part of the structure of the electronic device can selectively shield the camera or exhibit the color-changing appearance effect, such that the structure of the electronic device can be diverse with more flexible design. In in some other embodiments, the electrochromic device 100 can be attached to a surface of entire area of a side of the transparent casing 200. Regarding detailed structures of various features of the electronic device, it can be referred to the related descriptions of the above-described embodiments.

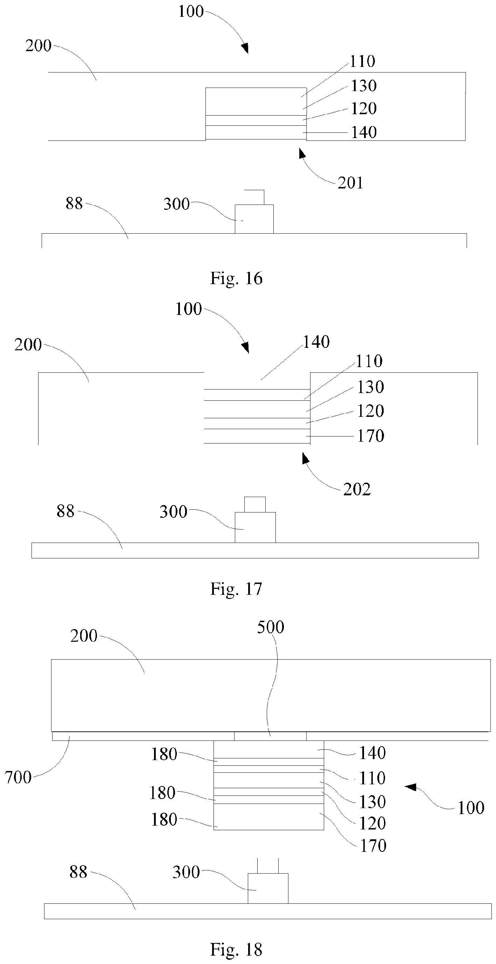

In an example illustrated in Fig. 16, the electronic device can similarly include an electrochromic device 100, a transparent casing 200, and a camera 300. A side of the transparent casing 200 defines a groove 201, the groove 201 corresponds to the camera 300, and the electrochromic device 100 is completely embedded in the groove 201. In some other embodiments, the electrochromic device 100 can have at least a part embedded in the groove 201 and another part protruding from the groove 201, a structure of this part can be selected by a person skilled in the art according to practical design requirements.

Optionally, the electrochromic device 100 includes a first conductive layer 110, a chromic material layer 130, and a second conductive layer 120 stacked sequentially in a depth direction of the groove 201, and the first conductive layer 110 is provided at a bottom side defining the groove 201. Furthermore, the electrochromic device 100 can also include a first baseplate 140 provided at an outer surface of the second conductive layer 120, and the first baseplate 140 can cover, protect, and support the second conductive layer 120.

Furthermore, in an example illustrated in Fig. 17, the difference from the example illustrated in Fig. 16 is that the transparent casing 200 in this embodiment defines a through receiving hole 202, the receiving hole 202 corresponds to the camera 300, and the electrochromic device 100 is embedded in the receiving hole 202. Optionally, the electrochromic device 100 includes the first baseplate 140, the first conductive layer 110, the chromic material layer 130, the second conductive layer 120, and the second baseplate 170 stacked sequentially in an axis direction of the receiving hole 202. Likewise, the electrochromic device 100 can be partially embedded in the receiving hole 202 in some other embodiments.

Certainly, the structures in the above-described embodiments can also be applied in the present example. For example, the electrochromic device 100 can include the first baseplate, the first conductive layer, the chromic material layer, the second conductive layer, and the second baseplate, and further can include the ion barrier layer, a processing protective layer, etc. Detailed structure and features of this portion are also not elaborated herein.

For the electronic devices in the above-described two examples, the transparent casing is provided with the structure of the groove or the receiving hole, and the electrochromic device is provided in the groove or the receiving hole, such that the electrochromic device can be well protected, and meanwhile the overall structure of the electronic device can have a reduced thickness, thereby saving space.

In an example illustrated in Fig. 18, the electronic device includes an electrochromic device 100, a transparent casing 200, a camera 300, and an apparent film layer 700. The apparent film layer 700 is attached to the transparent casing 200, and a light-transmissive area of the apparent film layer 700 is a light-transmissive through hole which is internally filled with the optically clear adhesive 500. The electrochromic device 100 corresponds to the light-transmissive area of the apparent film layer 70, and the camera 300 corresponds to the electrochromic device 100.

Optionally, in the present example, the electrochromic device 100 having a structure of double baseplates is taken as an example for description. The difference from the foregoing embodiments is that the electrochromic device 100 further includes an antireflection film layer 180 and the antireflection film layer 180 is provided between the first baseplate 140 and the first conductive layer 110, between the second baseplate 170 and the conductive layer 120, as well as a side surface of the second baseplate 170 away from the second conductive layer 120.

It should be noted that the antireflection film 180 can be provided at one or more of the above positions and the antireflection film 180 can be provided between adjacent medium layers with different refractive indexes, in some other embodiments. The antireflection film 180 is a transparent thin film capable of weakening the reflected light according to principles of thin film interference. Generally speaking, a multilayer film structure can have a better antireflection effect.

Therefore, the antireflection film 180 in examples of the present application can also be a stacked film of the multilayer film structure. According to principles of antireflection of the antireflection film, the refractive index of the antireflection film satisfies the formula: $n = \sqrt{n_1 \times n_2}$ ; in which $n_1$ and $n_2$ represent refractive indexes of two adjacent medium layers respectively, and n represents the refractive index of the antireflection film. Taking the air and the second baseplate 170 (glass) as an example, the refractive index n ( $n = \sqrt{1 \times 1.5}$ )of the antireflection film provided at a side surface of the second baseplate 170 away from the second conductive layer 120 is equal to 1.225. Certainly, the antireflection film 180 itself can also be formed by stacking a plurality of layers, and relationship between adjacent sub-stacked structures of the antireflection film satisfies the formula $n = \sqrt{n_1 \times n_2}$ .

Optionally, a material of the antireflection film 180 can be $Al_2O_3$, $MgF_2$, $Bi_2O_3$, etc., and a thickness of the antireflection film 180 is generally a quarter of an optical wavelength. Certainly, the antireflection effect cannot be limitlessly improved by simply increasing the number of the film layers, the antireflection effect has close relations to design of thickness of the film layer, selection of the material of the film layer, etc., and detailed technical features of the material and thickness design of the antireflection film will not be elaborated herein.

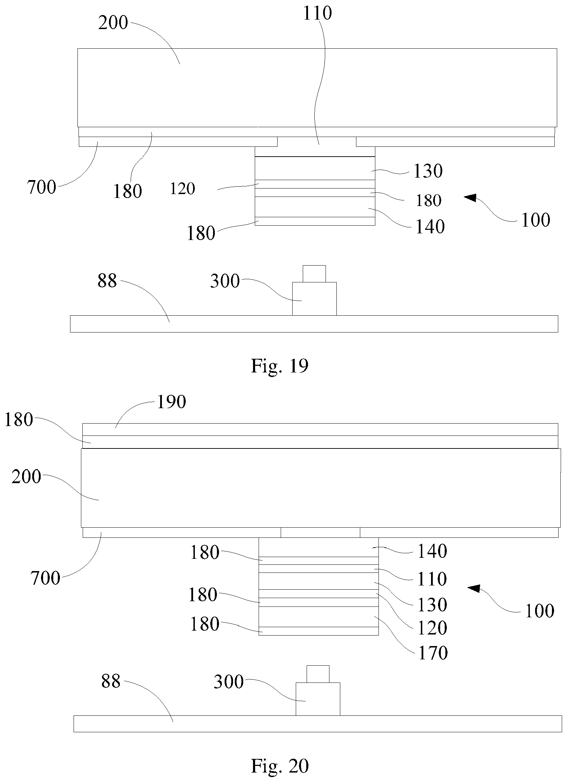

In an example illustrated in Fig. 19, the electronic device also includes an electrochromic device 100, a transparent casing 200, a camera 300, and an apparent film layer 700. The difference from the previous embodiment is that the electrochromic device 100 has a single baseplate. The first conductive layer 110 is directly provided at a light-transmissive area of the apparent film layer 700, and an antireflection film 180 is provided between the apparent film layer 700 and the transparent casing 200, between a first baseplate 140 and a second conductive layer 120, and a side surface of the first baseplate 140 away from the second conductive layer 120. Likewise, the refractive index of the antireflection film 180 satisfies the formula $n = \sqrt{n_1 \times n_2}$ . Taking the antireflection film 180 between the first baseplate 140 and the second conductive layer 120 as an example, generally, the refractive index of the second conductive layer 120 (ITO) is about 1.78, the refractive index of the first baseplate 140 (e.g. glass) is 1.5, and thus the refractive index n ( $n = \sqrt{1.5 \times 1.78}$ ) of the antireflection film 180 between the first baseplate 140 and the second conductive layer 120 equals to 1.63.

The difference of the electronic device illustrated in Fig. 20 from the example illustrated in Fig. 18 is that the side surface of the transparent casing 200 away from the electrochromic device 100 of this embodiment is provided with the antireflection film 180 and a protective film 190. The protective film 190 can include an anti-fingerprint (AF) film, a diamond-like carbon (DLC) film, etc. The AF film can be used to avoid fingerprint residue, and the DLC film is used to increase wear resistance of the outer surface of the transparent casing 200. The protective film 190 can include only one or both of the AF film and the DLC film. When both of the AF film and the DLC film are provided, the DLC film is provided at an outermost surface. Regarding detailed technical features regarding the antireflection film 180, it can be referred to the related description of the forgoing embodiments.

Additionally, it should be noted that, in the structure of the electronic device illustrated in Fig. 19, the side surface of the transparent casing 200 away from the electrochromic device 100 can also be provided with the antireflection film 180 and the protective film 190.

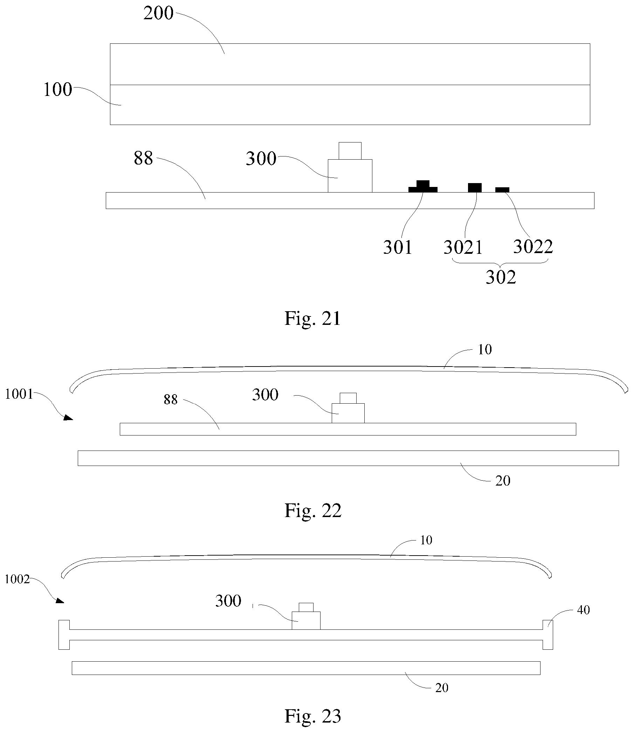

As illustrated in Fig. 21, the electronic device in the present embodiment can include an electrochromic device 100, a transparent casing 200, a camera 300, a flash lamp 301, and a sensing unit 302.

The flash lamp 301 can emit light through the electrochromic device 100 and the transparent casing 200 when the electrochromic device 100 is in the transparent or semi-transparent state. The flash lamp 301 can be provided at a middle frame or a circuit board (reference numeral 88 as illustrated in the figure) of the electronic device together with the camera 300 side by side, and can also be provided at other positions, which is not specifically limited herein.

Optionally, the sensing unit 302 can include an optical sensor unit 3021 and a proximity sensor unit 3022. The optical sensor unit 3021 is configured to acquire ambient light, i.e. sensing the surrounding light condition, and cause a processing chip to automatically adjust backlight brightness of a display, thereby reducing power consumption of the product. The power consumed by the display is up to 30% of the total power of a battery, the ambient light sensor can prolong the operating time of the battery to the utmost extent. Furthermore, the ambient light sensor helps the display in providing a soft picture. When the ambient brightness is high, a liquid crystal display with the ambient light sensor will be automatically adjusted to a high brightness. When the external environment is dark, the display will be adjusted to a low brightness. A common optical sensor unit 3021 includes a photoconductive resistance, a photosensitive diode, a photoelectric triode, a silicon photocell, etc.

The proximity sensor unit 3022 is a device capable of sensing an approaching object, it identifies the proximity of the object by means of a displacement sensor that is sensitive to the approaching object and outputs a corresponding switch signal. Therefore, the proximity sensor is also referred to as a proximity switch. The proximity sensor can detect movement and presence information of an object and convert them into an electric signal, and specifically can be configured to assist in controlling turn-on and turn-off of the display screen of the electronic device. The position of the sensing unit 302 is also not limited to the situations illustrated in the figures.

The electronic device provided by the present embodiment can shield and expose functional devices such as the camera, the flash lamp, the sensing unit or the like at the same time.

As illustrated in Fig. 22, the electronic device includes a rear cover 10, a screen 20, and a camera 300. The rear cover 10 is connected to the screen 20, the rear cover 10 and the screen 20 define a receiving space 1001 therebetween, and the camera 300 is located in the receiving space 1001 defined by the rear cover 10 and the screen 20.

Specifically, the rear cover can include a chromic device switchable between a first state and a second state, the first state is a non-transparent or semi-transparent state, and the second state is a transparent state. The camera 300 is configured to capture an image through the chromic device when the chromic device is in the transparent state. Specifically, a non-transmissive or non-transparent state means that a user cannot perceive the camera with the naked eyes through the rear cover, i.e. achieving an effect that the camera is completely hidden; a semi-transparent or semi-transmissive state means that the user can see a profile of the camera with the naked eyes through the rear cover, thereby achieving an effect that the camera is at least partially hidden; and a full transparent or full transmissive state means that the user can see the profile and specific structural details of the camera through the rear cover.

Optionally, the chromic device is an electrochromic device switchable from a non-transparent state to a transparent state in response to an electric signal, and the camera 300 is able to capture an image when the electrochromic device is in the transparent state. Regarding the detailed structural features regarding the chromic device which is the electrochromic device, it can be referred to the related description of the forgoing embodiments, which is not elaborated herein.

Additionally, the chromic device can also be a piezochromic device switchable from a non-transparent state to a transparent state in response to a pressure signal, and the camera 300 is able to capture an image when the piezochromic device is in the transparent state. Specifically, a side surface of the rear cover 10 can be provided with a piezochromic device or a piezochromic material layer, or the rear cover 10 itself is made of the piezochromic material.

The piezochromic luminescent material (also referred to as a machanochromic luminescent material) is a kind of "smart" materials with luminescent properties that obviously change its color in response to external force, such as a pressure, a shear force, a tensile force, etc. It is widely used in stress sensors, anti-fake trademarks, memory chips, data storage, optical recording, or other fields. According to different principles of luminescence, the piezochromic luminescent material includes a piezochromic luminescent material and a piezochromic phosphorescent material. Changes in chemical construction and the aggregation structure of molecules of the material under the action of external force are two approaches to piezochromic luminescence of the material. By changing the molecular chemical construction under the action of the external force, the different molecular structures before and after the action of the external force can emit different colored light to achieve piezochromic luminescence. For example, a colorless macromolecule containing a spiropyran structure opens a loop and is converted into a macromolecule of a red merocyanine structure, a divinylanthracene PAIE compound, etc. under the action of the external force.

Optionally, the chromic device can be a chromic device in relation to the temperature, and the chromic device is switchable from a non-transparent state to a transparent state in response to a temperature signal, and the camera 300 is able to capture an image when the electrochromic device is in the transparent state.

Furthermore, a side surface of the rear cover 10 can be provided with a thermochromic device or a thermochromic material layer, or the rear cover 10 itself is made of the thermochromic material. Specifically, the thermochromic material can be a reversible thermochromic material, such as aminophenyl mercury dithiazone, dimethylaminobenzene, titanium dioxide, dimethyl cellulose, etc. Material types and chromic principles regarding the thermochromism are not elaborated herein.

Several operation processes of the electronic device are as follows, and the case where the chromic device is an electrochromic device is taken as an example to describe the principle. (1) the camera is turned on, i.e. in a shooting state, the electrochromic device starts to change color and convert from a shield state, i.e. an opaque state to a transparent state, the camera completes the shooting and is turned off, and the electrochromic device starts to change color reversely and convert from the transparent state to the shield state; (2) the electrochromic device starts to change color and convert from the shield state, i.e. the opaque state to the transparent state, the camera is turned on to operate and complete the shooting after the electrochromic device converts to the fully transparent state, the camera is turned off, the electrochromic device starts to change color reversely and convert from the transparent state to the shield state thereby hiding the camera. It should be noted that, during the above two operations, after the camera completes the shooting, the turn-off of the camera and the start of the reverse color-changing of the electrochromic device can be performed simultaneously, or any one of the two processes can be performed prior to the other, which is not specifically limited herein.

Furthermore, the electrochromic device also has two states, i.e. a shield state (referred to as a default state) and a non-shield state (referred to as an operation state). The shield state can be an energized state of the electrochromic device, that is, when the electrochromic device switches from the shield state to the non-shield state, the electrochromic device is de-energized or applied with a reverse voltage. The purpose of application of the reverse voltage is to expedite the color-changing speed. When the electrochromic device switches from the non-shield state to the shield state, the electrochromic device can be energized. Additionally, the shield state of the electrochromic device can also be a non-energized state, that is, when the electrochromic device switches from the shield state to the non-shield state, the electrochromic device is energized, while when the electrochromic device switches from the non-shield state to the shield state, the electrochromic device is de-energized or applied with the reverse voltage to expedite the color-changing speed.

Furthermore, as illustrated in Fig. 23, the electronic device in the present embodiment includes a rear cover 10, a screen 20, a camera 300, and a housing 40. The screen 20 and the rear cover 10 are connected to two opposite sides of the housing 40, and the housing 40 can be a middle plate of a middle frame, a bearing plate, a rear cover or other structures of the electronic device. The camera 30 is located in an enclosed space 1002 between the rear cover 10 and the housing 40, and the camera can capture an image through the rear cover 10. The rear cover 10 includes a chromic device or the rear cover 10 has a chromic function, and is switchable between the transparent state and the non-transparent state. The camera can capture an image through the rear cover 10 when the rear cover 10 is in the transparent state. The difference from the embodiment illustrated in Fig. 19 is that the electronic device of the present embodiment further includes the housing 40, the housing 40 and the rear cover 10 define an enclosed space 1002, and the camera 300 is located in the enclosed space 1002.

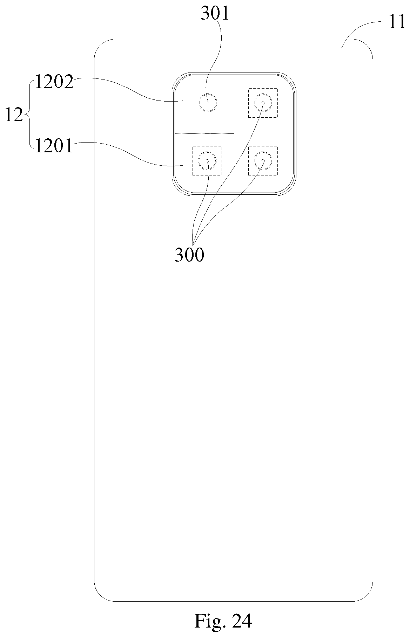

As illustrated in Fig. 24, the rear cover 10 in the present embodiment can include a main body 11 and a decorative cover plate 12. The main body 11 defines a mounting hole, and the decorative cover plate 12 is embedded in the mounting hole. The main body 11 can include the transparent casing and the chromic device attached to the transparent casing, and the main body 11 of such a structure has a color-changing appearance effect (specifically refer to the related description of the forgoing embodiments). Certainly, in some embodiments, the main body 11 can also only include the transparent casing, the ink layer or other structures without the chromic device. That is, the main body 11 of such a structure can not have the color-changing effect. The transparent casing can be made from glass or PET material.

Optionally, the decorative cover plate 12 in the illustrated embodiment is used to cover the camera 300 and the flash lamp 301, and can decorate and shield the camera 300 and the flash lamp 301. Certainly, in some other embodiments, the decorative cover plate 12 can also only correspond to the camera 300 and cover it. Additionally, the decorative cover plate 12 can also simultaneously correspond to the sensor unit, the camera, the flash lamp, and other devices.

The decorative cover plate 12 can similarly include the transparent casing and the chromic device attached to the transparent casing. When the main body 11 is also able to change color, the decorative cover plate 12 and the main body 11 can be separately provided with independent chromic devices (including circuit structures and stacked structures of the chromic device, etc.). That is, the chromic devices of the decorative cover plate 12 and the main body 11 can perform independent color-changing control. Additionally, in some other embodiments, the decorative cover plate 12 and the main body 11 can be provided with the same one chromic device, thereby achieving that the decorative cover plate 12 and the main body 11 can control the color-changing effect simultaneously. Regarding specific structures regarding the arrangement of the chromic device for the decorative cover plate 12 and the main body 11 of the rear cover, it can be referred to the related description of the forgoing embodiments, which are not elaborated herein.

As illustrated in Fig. 24, optionally, the decorative cover plate 12 in the present embodiment can further include a first control area 1201 and a second control area 1202. The first control area 1201 and the second control area 1202 can be switchable between a first state and a second state independently. That is, the first control area 1201 and the second control area 1202 are provided with independent chromic devices or circuit structures separately, such that the first control area 1201 and the second control area 1202 can perform independent color-changing control. The camera 300 and the flash lamp 301 correspond to the first control area 1201 and the second control area 1202 respectively. This kind of structure achieves that the camera 300 and the flash lamp 301 share the same decorative cover plate 12 but correspond to different areas, thereby realizing the purpose of independent shielding control.

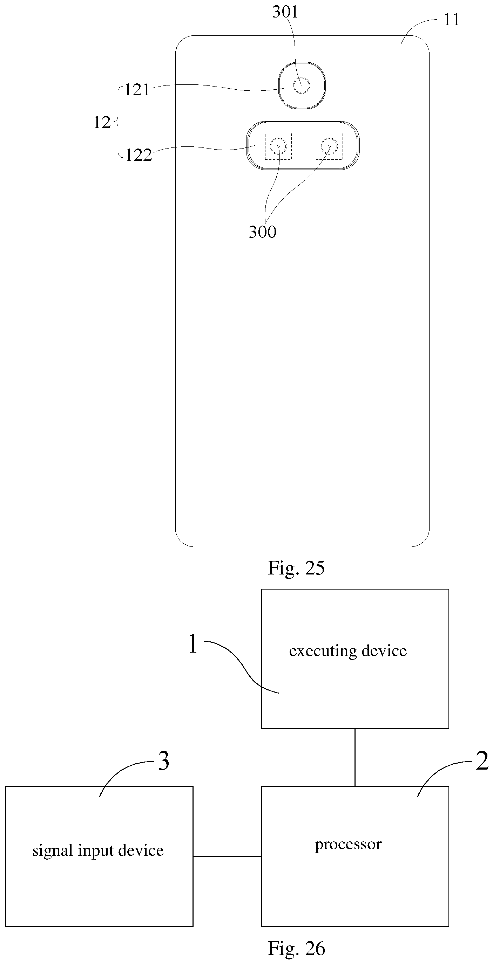

As illustrated in Fig. 25, the difference from the previous embodiment is that the decorative cover plate 12 of the rear cover in the present embodiment includes a first decorative cover plate 121 and a second decorative cover plate 122. That is, the decorative cover plate 12 includes two independent sub cover plates. The flash lamp 301 and the camera 300 correspond to the first decorative cover plate 121 and the second decorative cover plate 122 respectively. Optionally, the first decorative cover plate 121 and the second decorative cover plate 122 can be provided with chromic devices respectively, thereby realizing independent color-changing control. Certainly, the first decorative cover plate 121 and the second decorative cover plate 121 can be provided with the same chromic device or employ the same circuit to perform simultaneous control, thereby realizing an effect that the first decorative cover plate 121 and the second decorative cover plate 121 are simultaneously controlled to change color.

Additionally, it should be noted that, in some other embodiments, the rear cover 10 can also include a plurality of decorative cover plates, and different decorative cover plates correspondingly cover different functional devices such as the camera, the flash lamp, the sensor, etc. The technical feature regarding this portion, a person skilled in the art can make some modified designs within the design concept of the present embodiment, which will not be enumerated and elaborated herein.

Furthermore, embodiments of the present application further provides an electronic device, as illustrated in Fig. 26, the electronic device in the present embodiment includes a processor 2, a signal input device 3, and an executing device 1. The executing device 1 can include the camera, the flash lamp, the sensor, the rear cover having the electrochromic function, the electrochromic device, or the like in the forgoing embodiments. The processor 2 is electrically coupled with the executing device 1 and the signal input apparatus 3 separately.

Specifically, the processor 2 is configured to receive a control command input through the signal input apparatus, and control an operation state of the executing device 1 according to the control command. Controlling the operation state of the executing device 1 includes controlling turn-on and turn-off of the camera, as well as controlling variation of a voltage or current signal state of the electrochromic device to achieve the purpose of controlling a color-changing state of the electrochromic device when the executing device 1 is the electrochromic device. The signal input apparatus 3 can include a touch display screen, an operating key, or the like, the detailed structure and the signal input ways are as follows.

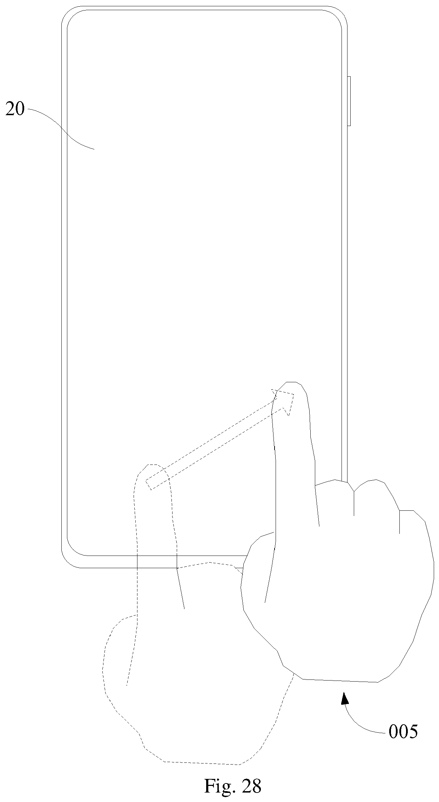

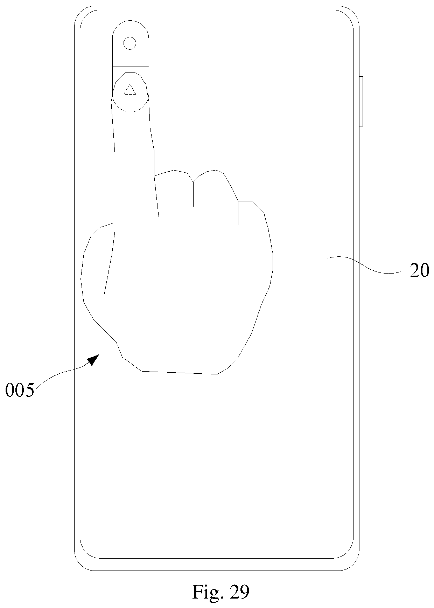

As illustrated in Figs. 22 to 27, the electronic device in the present embodiment can include a screen 20. The screen 20 can be a touch display screen, the control command input by the signal input apparatus 3 can be a touch operation received by the touch display screen, and the touch operation includes at least one of sliding, clicking, and long-pressing. As illustrated in Figs. 28 and 29, Fig 28 shows that an operator (in which the reference numeral 005 in the figure denotes a hand of the operator) inputs the control command by sliding on the touch display screen; and the state in Fig. 29 can show that the operator input the control command by clicking or long-pressing a chart or a particular position on the screen 20.

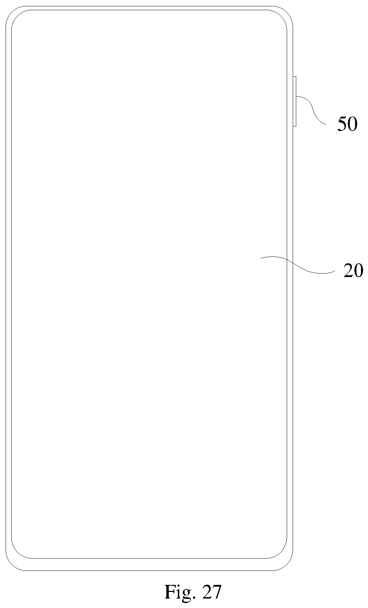

Furthermore, as illustrated in Fig. 27, the electronic device in the present embodiment includes an operating key 50, and the control command can also be a trigger command of the operating key. The operating key 50 can be a separate key, and can also be other function keys of the electronic device, such as multiplexing of a power key, a volume key, etc. The different control commands received by the processor 2 are defined according to triggering ways of different keys, such that the processor 2 can realize perform different signal controls on the executing device 1.

Optionally, the control command can include at least one of an image capture demand, a flash lamp turn-on demand, and other functional assembly demands. It should be noted that the structural premise of the present embodiment is that the chromic devices for the executing devices 1 can shield and hide the above-described devices. Specifically, the image capture demand can be applied in a scene where the user needs shooting, such as taking photos, taking videos, video calls and the like, and in another scene where the user wants to unlock the electronic device for payment, encryption, answering a call or other identifications. The flash lamp turn-on demand can be a situation where the user wants to turn on the flash lamp, specifically, the processor 2 controls the chromic device of the executing device 1 to be in a transparent state, in which case, the functional device can perform image capture or luminescence through the chromic device. The functional device herein can include the camera, the flash lamp, the sensor, etc.

For instance, the image capture demand is taken as an example. When the user operates the electronic device and needs image capture (in a scene where the user needs shooting, such as taking photos, taking videos, video calls and the like, and in another scene where the user wants to unlock the electronic device for payment, encryption, answering a call or other identifications), he can touch a corresponding touch functional area icon on the touch display screen. The processor 2 receives the corresponding control command, and controls the executing device 1 (when it is the chromic device) to change color, the shield state is switched into the transparent state so as to allow the camera to capture an image. Regarding specific action sequence regarding the control process, it can be referred to the related description of the forgoing embodiments of the electronic device, which is also not elaborated herein.

With the electronic device provided by embodiments of the present application, on the one hand, the camera can be shielded, and on the other hand, the electronic device can have an color-changing appearance effect.

**Claims**

1. An electronic device, comprising:

   a housing (40);
   a rear cover (10) connected to the housing (40) and comprising a transparent casing (200) and an electrochromic device (100) stacked together, and the electrochromic device (100) comprising a first baseplate (140), a first conductive layer (110), an electrochromic material layer (130), a second conductive layer (120), and a second baseplate (170) stacked sequentially; and
   a rear camera (300) opposite the electrochromic device (100),
   wherein the rear cover (10) further comprises an apparent film layer (700), the apparent film layer (700) is provided between the electrochromic device (100) and the transparent casing (200) or the electrochromic device (100) is interposed between the apparent film layer (700) and the transparent casing (200), the apparent film layer (700) comprises a light-transmissive area (710) and a colored area (720), the rear camera (300) is opposite the light-transmissive area (710), and the colored area (720) is configured to cooperate with the electrochromic device (100) to cause the rear cover (10) to exhibit a color-changing appearance effect,
   wherein the colored area (720) of the apparent film layer (700) comprises a third baseplate (721) and at least one of an ink layer and an optical coating layer stacked on the third baseplate (721),
   wherein the rear cover (10) further comprises a substrate colored layer (900), the substrate colored layer (900) and the apparent film layer (700) are provided at two opposite sides of the electrochromic device (100) respectively, and the substrate colored layer (900) defines a light-transmissive through hole (910) opposite the light-transmissive area (710) of the apparent film layer (700).

2. The electronic device according to claim 1, further comprising an antireflection film (180) provided at at least one of a place between the first baseplate (140) and the first conductive layer (110), a place between the second conductive layer (120) and the second baseplate (170), a side surface of the transparent casing (200) away from the electrochromic device (100), and a side surface of the second baseplate (170) away from the second conductive layer (120).

3. The electronic device according to claim 1, wherein the light-transmissive area (710) is a light-transmissive through hole or a transparent area with base material, and the colored area (720) surrounds the light-transmissive area (710).

4. The electronic device according to any one of claims 1 to 3, wherein the electronic device further comprises at least one of an optical sensor unit (3021) and a proximity sensor unit (3022), the optical sensor unit (3021) is configured to acquire ambient light to cause a processing chip to automatically adjust backlight brightness of a display, each of the optical sensor unit (3021) and the proximity sensor unit (3022) is covered by the electrochromic device (100) and able to perform signal acquisition through the rear cover (10).

5. The electronic device according to any one of claims 1 to 4, wherein the rear cover (10) comprises a main body (11) and a decorative cover plate (12) provided with the transparent casing (200) and the electrochromic device (100), the decorative cover plate (12) has a first state and a second state and is switchable between the first state and the second state, the first state is a non-transparent state or a semi-transparent state, and the second state is a transparent state, and the rear camera (300) is arranged opposite the decorative cover plate (12) to allow the rear camera (300) to acquire an optical signal through the decorative cover plate (12).

6. The electronic device according to claim 5, wherein the electronic device further comprises a flash lamp (301) opposite the decorative cover plate (12), light from the flash lamp (301) is able to pass through the decorative cover plate (12) when the decorative cover plate (12) is in the transparent state.

7. The electronic device according to claim 6,

wherein the decorative cover plate (12) comprises a first control area (1201) and a second control area (1202), the first control area (1201) and the second control area (1202) are switchable between the first state and the second state independently, the rear camera (300) is opposite the first control area (1201), and the flash lamp (301) is opposite the second control area (1202), or

the decorative cover plate (12) comprises a first decorative cover plate (121) and a second decorative cover plate (122), the flash lamp (301) is opposite the first decorative cover plate (121), and the rear camera (300) is opposite the second decorative cover plate (122).

8. The electronic device according to any one of claims 1 to 7, wherein the electronic device further comprises a processor (2) coupled with the rear cover (10) and the rear camera (300) separately and configured to receive a control command configured to control the rear camera (300) to perform image capture through the rear cover (10).

9. The electronic device according to claim 8,

wherein the electronic device further comprises a touch display screen (20), the control command is a touch operation received by the touch display screen (20), and the touch operation comprises at least one of sliding, clicking, and long-pressing, or
the electronic device further comprise an operating key (50), and the control command is a trigger command of the operating key (50).

**Patentansprüche**

1. Elektronische Vorrichtung, umfassend:

ein Gehäuse (40);
eine hintere Abdeckung (10), die mit dem Gehäuse (40) verbunden ist und eine transparente Verschalung (200) und eine elektrochrome Vorrichtung (100) umfasst, die aufeinandergestapelt sind, und wobei die elektrochrome Vorrichtung (100) eine erste Basisplatte (140), eine erste leitende Schicht (110), eine Schicht aus elektrochromem Material (130), eine zweite leitende Schicht (120) und eine zweite Basisplatte (170) umfasst, die der Reihe nach gestapelt sind; und
eine hintere Kamera (300) gegenüber der elektrochromen Vorrichtung (100),
wobei die hintere Abdeckung (10) ferner eine sichtbare Filmschicht (700) umfasst, die sichtbare Filmschicht (700) zwischen der elektrochromen Vorrichtung (100) und der transparenten Verschalung (200) vorgesehen ist, oder die elektrochrome Vorrichtung (100) zwischen der sichtbaren Filmschicht (700) und der transparenten Verschalung (200) eingefügt ist, die sichtbare Filmschicht (700) einen lichtdurchlässigen Bereich (710) und einen farbigen Bereich (720) umfasst, die hintere Kamera (300) gegenüber dem lichtdurchlässigen Bereich (710) ist, und der farbige Bereich (720) so ausgelegt ist, dass er mit der elektrochromen Vorrichtung (100) kooperiert, um zu bewirken, dass die hintere Abdeckung (10) den Effekt eines farbverändernden Erscheinungsbildes bietet,
wobei der farbige Bereich (720) der sichtbaren Filmschicht (700) eine dritte Basisplatte (721) und mindestens eine von einer Tintenschicht und einer optischen Deckschicht umfasst, die auf der dritten Basisplatte (721) gestapelt ist,
wobei die hintere Abdeckung (10) ferner eine farbige Substratschicht (900) umfasst, die farbige Substratschicht (900) und die sichtbare Filmschicht (700) jeweils an zwei gegenüberliegenden Seiten der elektrochromen Vorrichtung (100) vorgesehen sind, und die farbige Substratschicht (900) ein lichtdurchlässiges Durchgangsloch (910) gegenüber dem lichtdurchlässigen Bereich (710) der sichtbaren Filmschicht (700) definiert.

2. Elektronische Vorrichtung nach Anspruch 1, ferner umfassend einen Antireflexfilm (180), der an mindestens einer von einer Stelle zwischen der ersten Basisplatte (140) und der ersten leitenden Schicht (110), einer Stelle zwischen der zweiten leitenden Schicht (120) und der zweiten Basisplatte (170), einer von der elektrochromen Vorrichtung (100) abgewandten Seitenfläche der transparenten Verschalung (200) und einer von der zweiten leitenden Schicht (120) abgewandten Seitenfläche der zweiten Basisplatte (170) vorgesehen ist.

3. Elektronische Vorrichtung nach Anspruch 1, wobei der lichtdurchlässige Bereich (710) ein lichtdurchlässiges Durchgangsloch oder ein transparenter Bereich mit Basismaterial ist, und der farbige Bereich (720) den lichtdurchlässigen Bereich (170) umgibt.

**4.** Elektronische Vorrichtung nach einem der Ansprüche 1 bis 3,
wobei die elektronische Vorrichtung ferner mindestens eine von einer optischen Sensoreinheit (3021) und einer Näherungssensoreinheit (3022) umfasst, die optische Sensoreinheit (3021) zum Erfassen von Umgebungslicht ausgelegt ist, um einen Verarbeitungschip zum automatischen Anpassen von Hintergrundhelligkeit einer Anzeige zu veranlassen, wobei jede der optischen Sensoreinheit (3021) und der Näherungssensoreinheit (3022) von der elektrochromen Vorrichtung (100) abgedeckt wird und zum Durchführen von Signalerfassung durch die hintere Abdeckung (10) in der Lage ist.

**5.** Elektronische Vorrichtung nach einem der Ansprüche 1 bis 4,
wobei die hintere Abdeckung (10) einen Hauptkörper (11) und eine dekorative Abdeckplatte (12) umfasst, die mit der transparenten Verschalung (200) und der elektrochromen Vorrichtung (100) versehen ist, die dekorative Abdeckplatte (12) einen ersten Zustand und einen zweiten Zustand aufweist und zwischen dem ersten Zustand und dem zweiten Zustand gewechselt werden kann, wobei der erste Zustand ein nicht transparenter Zustand oder ein halbtransparenter Zustand ist, und der zweite Zustand eine transparenter Zustand ist, und die hintere Kamera (300) gegenüber der dekorativen Abdeckplatte (12) angeordnet ist, um zu ermöglichen, dass die hintere Kamera (300) ein optisches Signal durch die dekorative Abdeckplatte (12) erfasst.

**6.** Elektronische Vorrichtung nach Anspruch 5,
wobei die elektronische Vorrichtung ferner eine Blitzlampe (301) gegenüber der dekorativen Abdeckplatte (12) umfasst, wobei Licht von der Blitzlampe (301) durch die dekorative Abdeckplatte (12) durchtreten kann, wenn die dekorative Abdeckplatte (12) im transparenten Zustand ist.

**7.** Elektronische Vorrichtung nach Anspruch 6,
wobei die dekorative Abdeckplatte (12) einen ersten Steuerbereich (1201) und einen zweiten Steuerbereich (1202) umfasst, der erste Steuerbereich (1201) und der zweite Steuerbereich (1202) unabhängig zwischen dem ersten Zustand und dem zweiten Zustand gewechselt werden können, die hintere Kamera (300) gegenüber dem ersten Steuerbereich (1201) ist, und die Blitzlampe (301) gegenüber dem zweiten Steuerbereich (1202) ist, oder die dekorative Abdeckplatte (12) eine erste dekorative Abdeckplatte (121) und eine zweite dekorative Abdeckplatte (122) umfasst, die Blitzlampe (301) gegenüber der ersten dekorativen Abdeckplatte (121) ist, und die hintere Kamera (300) gegenüber der zweiten dekorativen Abdeckplatte (122) ist.

**8.** Elektronische Vorrichtung nach einem der Ansprüche 1 bis 7,
wobei die elektronische Vorrichtung ferner einen Prozessor (2) umfasst, der mit der hinteren Abdeckung (10) und der hinteren Kamera (300) separat gekoppelt und zum Empfangen eines Steuerbefehls ausgelegt ist, der so ausgelegt ist, dass er die hintere Kamera (300) zum Durchführen von Bilderfassung durch die hintere Abdeckung (10) steuert.

**9.** Elektronische Vorrichtung nach Anspruch 8,

wobei die elektronische Vorrichtung ferner einen Touch-Anzeigebildschirm (20) umfasst, der Steuerbefehl eine Touch-Bedienung ist, der durch den Touch-Anzeigebildschirm (20) empfangen wird, und die Touch-Bedienung mindestens eines von Ziehen, Klicken und langem Drücken ist, oder die elektronische Vorrichtung ferner eine Bedientaste (50) umfasst, und der Steuerbefehl ein Auslösebefehl der Bedientaste (50) ist.

**Revendications**

**1.** Dispositif électronique, comportant :

un boîtier (40) ;
un couvercle arrière (10) lié au boîtier (40) et
comportant un coffret transparent (200) et un dispositif électrochromique (100) empilés ensemble, et le dispositif électrochromique (100) comportant une première plaque (140) de base, une première couche conductrice (110), une couche (130) de matériau électrochromique, une deuxième couche conductrice (120), et une deuxième plaque (170) de base empilées séquentiellement ; et
une caméra arrière (300) face au dispositif électrochromique (100),
le couvercle arrière (10) comportant en outre une couche (700) de film apparent, la couche (700) de film apparent étant placée entre le dispositif électrochromique (100) et le coffret transparent (200) ou le dispositif électrochromique (100) étant interposé entre la couche (700) de film apparent et le coffret transparent (200), la couche (700) de film apparent comportant une zone (710) transmettant la lumière et une zone colorée (720), la caméra arrière (300) se trouvant face à la zone (710) transmettant la lumière, et la zone colorée (720) étant configurée pour coopérer avec le dispositif électrochromique (100) afin d'amener le couvercle arrière (10) à présenter un effet d'apparence changeant de couleur,

la zone colorée (720) de la couche (700) de film apparent comportant une troisième plaque (721) de base et une couche d'encre et/ou une couche de revêtement optique empilées sur la troisième plaque (721) de base, le couvercle arrière (10) comportant en outre une couche colorée (900) de substrat, la couche colorée (900) de substrat et la couche (700) de film apparent étant respectivement placées de deux côtés opposés du dispositif électrochromique (100), et la couche colorée (900) de substrat définissant un trou débouchant (910) transmettant la lumière face à la zone (710) transmettant la lumière de la couche (700) de film apparent.

2. Dispositif électronique selon la revendication 1, comportant en outre un film antireflet (180) placé à au moins un endroit parmi un endroit situé entre la première plaque (140) de base et la première couche conductrice (110), un endroit situé entre la deuxième couche conductrice (120) et la deuxième plaque (170) de base, une surface latérale du coffret transparent (200) à l'écart du dispositif électrochromique (100), et une surface latérale de la deuxième plaque (170) de base à l'écart de la deuxième couche conductrice (120).

3. Dispositif électronique selon la revendication 1, la zone (710) transmettant la lumière étant un trou débouchant transmettant la lumière ou une zone transparente dotée d'un matériau de base, et la zone colorée (720) entourant la zone (710) transmettant la lumière.

4. Dispositif électronique selon l'une quelconque des revendications 1 à 3, le dispositif électronique comportant en outre une unité (3021) de capteur optique et/ou une unité (3022) de capteur de proximité, l'unité (3021) de capteur optique étant configurée pour acquérir une lumière ambiante afin d'amener une puce de traitement à ajuster automatiquement la luminosité de rétroéclairage d'un affichage, chacune de l'unité (3021) de capteur optique et de l'unité (3022) de capteur de proximité étant recouverte par le dispositif électrochromique (100) et capable d'effectuer une acquisition de signal à travers le couvercle arrière (10) .

5. Dispositif électronique selon l'une quelconque des revendications 1 à 4, le couvercle arrière (10) comportant un corps principal (11) et une plaque (12) de couverture décorative munie du coffret transparent (200) et du dispositif électrochromique (100), la plaque (12) de couverture décorative possédant un premier état et un deuxième état et pouvant être commutée entre le premier état et le deuxième état, le premier état étant un état non transparent ou un état semi-transparent, et le deuxième état étant un état transparent, et la caméra arrière (300) étant disposée face à la plaque (12) de couverture décorative pour permettre à la caméra arrière (300) d'acquérir un signal optique à travers la plaque (12) de couverture décorative.

6. Dispositif électronique selon la revendication 5, le dispositif électronique comportant en outre une lampe (301) de flash face à la plaque (12) de couverture décorative, une lumière provenant de la lampe (301) de flash pouvant passer à travers la plaque (12) de couverture décorative lorsque la plaque (12) de couverture décorative est dans l'état transparent.

7. Dispositif électronique selon la revendication 6, la plaque (12) de couverture décorative comportant une première zone (1201) de commande et une deuxième zone (1202) de commande, la première zone (1201) de commande et la deuxième zone (1202) de commande pouvant être commutées indépendamment entre le premier état et le deuxième état, la caméra arrière (300) se trouvant face à la première zone (1201) de commande, et la lampe (301) de flash se trouvant face à la deuxième zone (1202) de commande, ou

la plaque (12) de couverture décorative comportant une première plaque (121) de couverture décorative et une deuxième plaque (122) de couverture décorative, la lampe (301) de flash se trouvant face à la première plaque (121) de couverture décorative, et la caméra arrière (300) se trouvant face à la deuxième plaque (122) de couverture décorative.

8. Dispositif électronique selon l'une quelconque des revendications 1 à 7, le dispositif électronique comportant en outre un processeur (2) couplé séparément avec le couvercle arrière (10) et la caméra arrière (300) et configuré pour recevoir une consigne de commande configurée pour commander la caméra arrière (300) afin d'effectuer une capture d'image à travers le couvercle arrière (10).

**9.** Dispositif électronique selon la revendication 8, le dispositif électronique comportant en outre un écran (20) d'affichage tactile, la consigne de commande étant une opération tactile reçue par l'écran (20) d'affichage tactile, et l'opération tactile comportant au moins une opération parmi un glissement, un clic et une pression longue, ou le dispositif électronique comportant en outre une touche (50) d'exploitation, et la consigne de commande étant une consigne de déclenchement de la touche (50) d'exploitation.

200

110
100 { 130
120

88   300

Fig. 1

200

150
110
100 { 130
120

88   300

Fig. 2

200

110
100 { 130
120
140

88   300

Fig. 3

Fig. 4

Fig. 5

Fig. 6

Fig. 7

Fig. 8

800

200

700

110

130

100

120

140

88    300

Fig. 9

700

720    710

Fig. 10

720

721

722    723

Fig. 11

710

200

700

100

900    910

300

Fig. 12

2    1    3

700

100

900

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

executing device

signal input device

processor

Fig. 26

50

20

Fig. 27

20

005

Fig. 28

20

005

Fig. 29

**EP 3 674 790 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015077830 A
- WO 2008149179 A
- WO 2017075459 A
- US 2007153119 A